# EUROPEAN PATENT SPECIFICATION

(11) **EP 4 404 332 B1**
(45) Date of publication and mention of the grant of the patent: **25.02.2026**
(21) Application number: 23152495.0
(22) Date of filing: 19.01.2023
(51) Int. Cl.: H01M 10/613, H01M 10/625, H01M 10/653, H01M 10/6556, H01M 10/6568, H01M 50/249, H01M 50/291, H01M 50/293

(54) **BATTERY SYSTEM FOR A VEHICLE**
BATTERIESYSTEM FÜR EIN FAHRZEUG
SYSTÈME DE BATTERIE POUR UN VÉHICULE

(43) Date of publication of application: 24.07.2024
(73) Proprietor: Volvo Truck Corporation, 405 08 Göteborg (SE)
(72) Inventor: LIU, Ya, 417 23 GÖTEBORG (SE)
(74) Representative: Ström & Gulliksson AB

(56) References cited:
- DE-A1- 102010 001 033
- JP-A- 2013 062 023
- KR-B1- 101 233 318
- KR-B1- 101 755 824
- US-A1- 2018 062 225
- US-A1- 2018 331 401

## Description

### TECHNICAL FIELD

The disclosure relates generally to a battery system. In particular aspects, the disclosure relates to a battery system of a vehicle. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Li-ion batteries are highly desired as power sources for hybrid and electric vehicles (HEV/EV) due to their high energy density and outstanding cycling stability. However, the capacity and lifetime of Li-ion batteries are very sensitive to high as well as low temperatures. As the temperature falls to below -10 °C or becomes higher than 25 °C, the capacity of Li-ion battery deteriorates drastically.

Furthermore, the Li-ion batteries suffer from temperature increase during charging and discharging. In some cases the temperature of the batteries can exceed 90 °C, which may cause a decrease in the capacity of the battery as well cell shorting and other safety issues.

Another issue with the use of Li-ion batteries is that the temperature distribution within the pack commonly is uneven due to each cell often having a slightly different impedance, which in turn may result in a shorter lifespan of the batteries.

Conventional cooling system for batteries often implement traditional fan or water cooling, making the cooling systems heavy and complex in order to provide sufficient cooling for the battery system.

### SUMMARY

According to a first aspect of the disclosure, a battery system for a vehicle is provided. The battery system may comprise a battery module and a cooling system. The battery module may comprise a battery unit with one or more battery cell.

The cooling system may comprise a cooling circuit. The cooling circuit may comprise tubing for distribution of a cooling fluid and cooling of the one or more battery cell. The tubing may comprise a battery cooling section routed along the battery unit.

The cooling system may comprise one or more heat conduction elements arranged to at least partially wrap around the battery cooling section. The one or more heat conduction elements may be arranged to be in contact with at least a portion of the battery unit.

The first aspect of the disclosure may seek to achieve a battery system allowing for efficient cooling. The first aspect of the disclosure may additionally or alternatively seek to achieve a battery system allowing for a more even temperature distribution in the battery unit. A technical benefit may include that the battery unit and thus the battery cells may operate at lower temperatures, thereby mitigating deteriorating capacity and increasing the expected lifespan of the battery system.

In some examples, the cooling system may comprise a heat exchanger. The heat exchanger may be arranged in the cooling circuit downstream from the battery cooling section. A technical benefit may include a more efficient cooling of the battery system.

In some examples, the one or more heat conduction elements may be arranged to wrap around at least a portion of the battery unit. A technical benefit may include an increased contact surface area between the battery unit and the heat conduction element(s), causing an increase in heat dissipation from the battery unit.

In some examples, the one or more heat conduction elements may be arranged to extend along a first surface of the battery unit. A technical benefit may include that the surface is at least partially covered allowing for even temperature distribution across the battery unit. Another technical benefit may be that the extension of the one or more heat conduction element increases the contact surface area between the battery unit and the heat conduction element thus increasing the heat dissipation from the battery unit.

In the present invention, the one or more heat conduction elements are arranged adjacent to the first surface of the battery unit. The one or more heat conduction elements may be arranged to be in contact with a surface of the battery cooling section facing away from the first surface of the battery unit such that the tubing is arranged between the battery unit and the one or more heat conduction elements. A technical benefit may include a further increased contact surface area between the heat conduction element and the battery unit. Another technical benefit may include that the heat conduction element may at least partially seal off the tubing from the other components of the battery system which may prevent potential leakage of cooling fluid from the tubing influencing other components of the battery system.

In the present invention, the battery unit has a second and third surface arranged opposite to each other and extending in a direction substantially orthogonal to the first surface. The one or more heat conduction elements may be arranged to extend along and in contact with the second and/or third surface. A technical benefit may include that the one or more heat conduction elements may at least partially wrap around the battery unit allowing for a more even temperature distribution in the battery unit. Another technical benefit may include an increased heat dissipation from the battery unit due to the increased contact surface area between the one or more heat conduction elements and the battery unit.

In some examples, the battery module may comprise a battery housing adapted to accommodate the battery unit. A technical benefit may include that the battery housing allows for a more predictable and optimizable environment for the battery unit in terms of temperature and other aspects potentially impacting the performance of the battery unit.

In some examples, the heat exchanger may be arranged outside of the battery housing. A technical benefit may include that the risk for heat dissipation of the components arranged inside the housing negatively impacting the cooling performance of the heat exchanger.

In some examples, the one or more heat conduction elements may be arranged to be in contact with the battery housing for dissipating heat from the battery unit to said battery housing. A technical benefit may include that the heat generated by the battery unit also may be dissipated to the housing, thus resulting in a more even temperature distribution in the battery unit and a generally improved rate of heat dissipation.

In some examples, the one or more heat conduction elements may be provided as a film or a foil. A technical benefit may include that a film or foil may be shaped and deformed in order to closely wrap around the battery unit and the tubing. Another technical benefit may further include that a film or foil is more cost-efficient and adaptable for different dimensions of battery units compared to rigid heat conduction elements.

In some examples, the interior walls of the battery housing may be clad with a layer of a heat conductive material such as graphite, aluminum, copper and/or graphene. A technical benefit may include that the clad walls allows for further heat dissipation from the battery unit due to the layer of the heat conductive material enhancing the heat dissipation from the battery unit to the battery housing.

In some examples, the layer of heat conductive material may encapsulate the battery unit from the battery housing. A technical benefit may include that the layer of heat conductive material may allow for a sealing of the interior of the battery casing and may thus prevent leakage of cooling fluid for example in the case of a leak in the tubing.

In some examples, the one or more heat conduction elements may comprise graphite, aluminum, copper and/or graphene. A technical benefit may include that such materials allows for heat transfer at a rapid rate, thereby increasing the efficiency of the cooling the battery unit.

In some examples, the battery cooling section of the tubing may comprise tubing in graphite and/or graphene. A technical benefit may include that the walls of the tubing allows for a more rapid heat transfer to the cooling medium, thereby increasing the efficiency of the cooling of the battery unit.

In some examples, the battery cooling section may comprise a meandering tube portion or labyrinth tube portion routed along the battery unit. A technical benefit may include that an increased heat dissipation from the battery unit is achieved due to an increased surface area of the battery unit being capable of dissipating heat to the cooling fluid in the tubing.

In some examples, the battery unit may at least partially be submerged in a cooling liquid inside the battery housing. A technical benefit may include that a more even temperature distribution of the battery unit is achieved due to cooling liquid distributing the heat dissipated from the battery unit.

In some examples, the cooling circuit may be a closed cooling circuit for circulating the cooling fluid. A technical benefit may include that a more cost-efficient and less complex battery system is achieved.

In some examples, the cooling system may form a heat pipe cooling system. The tubing may have an inner wick structure for causing flow of the cooling fluid by means of capillary force. A technical benefit may include that the efficiency of the cooling of the battery unit and battery cells is improved due to the improved cooling achievable with a heat pipe cooling system.

In some examples, the heat pipe cooling system may comprise a condensing arrangement. The condensing arrangement may be adapted to condense the cooling fluid downstream of the battery cooling section. The condensing arrangement may comprise a condensing unit such as a heat sink and/or a cooling fan.

In some examples, the battery system may comprise a pump. The pump may be arranged in the cooling circuit. The pump may be configured to control the flow of the cooling fluid through the cooling circuit. A technical benefit may include that the flow of cooling fluid may be adapted in accordance with the conditions present.

In some examples, the cooling system may comprise a heat exchanging arrangement for cooling the cooling fluid in the cooling circuit. The heat exchanging arrangement may comprise the heat exchanger arranged in the cooling circuit downstream from the battery cooling circuit. Additionally or alternatively, the heat exchanging arrangement may comprise the inner wick structure.

In some examples, the one or more heat conduction elements may be arranged to coat the outer exterior surface of at least a portion of the battery cooling section. A technical benefit may include that an increased heat dissipation from the battery cooling section may be achieved.

According to a second aspect of the disclosure, a vehicle may be provided. The vehicle may comprise a battery system according to any of the above examples. The second aspect of the disclosure may seek to achieve a vehicle with an increased battery service life and reliability. A technical benefit may include that the battery unit of the vehicle may operate at lower temperatures, thus increasing the efficiency and lifespan of the battery system.

In some examples, the battery system may be configured to power a propulsion source of the vehicle. A technical benefit may include a more efficient propulsion due to the battery system operating within a temperature interval allowing for a more efficient operation.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** is an exemplary battery system according to one example.
**FIG. 2** is an exemplary battery system according to one example.
**FIG. 3** is an exemplary battery system according to one example.
**FIG. 4** is another view of **FIG.2-3****,** according to another example.
**FIG. 5** is a cross-section of a portion of the tubing of a battery cooling system of a battery system according to one example.

### DETAILED DESCRIPTION

Aspects set forth below represent the necessary information to enable those skilled in the art to practice the disclosure.

The present inventor has realized that for an improved and/or ideal Li-ion battery package, the optimal temperature difference within the pack is required to be less than 5 °C which requires a high efficiency cooling system. Thus, the present inventor has realized that an even temperature distribution is of great importance for the performance, capacity and lifespan of the batteries.

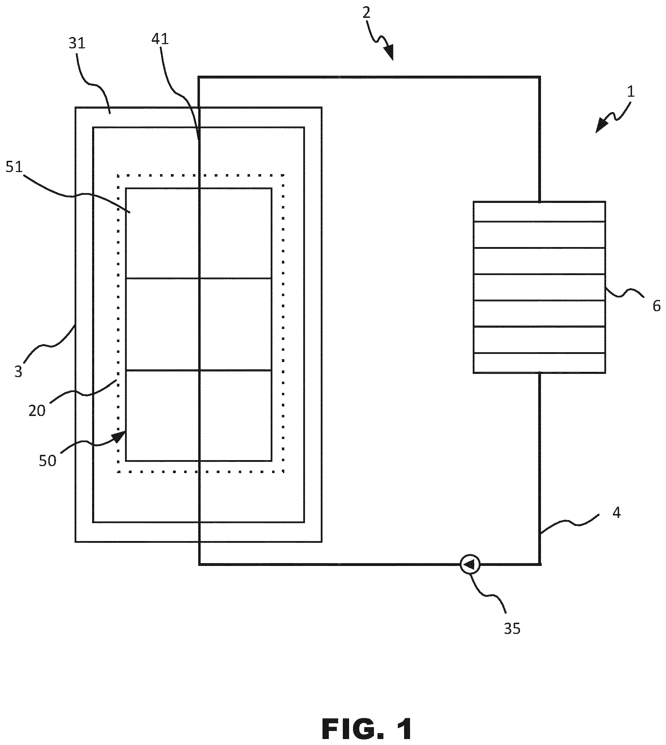

**FIG. 1** is an exemplary battery system **1.** The battery system **1** is intended for a vehicle. The vehicle may be a heavy-duty vehicle, such as a truck, bus, or construction equipment. The vehicle may also be a passenger car. The battery system **1** may be considered a vehicle battery system. It may however also be envisioned that the battery system may be utilized in other systems comprising a battery system requiring cooling.

The battery system **1** may comprise a battery module **3.** The battery system **1** may further comprise a cooling system **2.** The cooling system **2** may be adapted to cool the battery unit **50.** The cooling system **2** may be adapted to cool the one or more battery cell **51.**

The battery system **1** may be intended to power any component of the vehicle. Preferably, the battery system **1** may be configured to power a propulsion source of the vehicle. The propulsion source may thus be an electrical motor adapted to propel the vehicle.

The battery module **3** may comprise a battery unit **50.** The battery unit **50** may comprise one or more battery cell **51.** The cooling system **2** may be adapted to cool the battery unit **50** and thus the one or more battery cell **51** of the battery unit **50.**

In the depicted example, the battery unit **50** comprises a plurality of battery cells **51.** The battery cells **51** in the depicted example are arranged in three parallel stacks. It may however be envisioned that the battery cells **51** may be arranged in any conceivable configuration. It may also be envisioned that the battery unit **50** comprises a single battery cell **51.**

The cooling system 2 may comprise a cooling circuit 4. The cooling circuit **4** may comprise tubing **42** for distribution of a cooling fluid and cooling of the one or more battery cell **51.** Thus, the tubing **42** is adapted to guide a cooling fluid and thereby cool the one or more battery cell **51.** The tubing **42** may be in any form of conventional type of tubing suitable for a cooling system such as pipes, hoses etc.

The tubing **42** may comprise a battery cooling section **41.** The battery cooling section **41** may be routed along the battery unit **50.** Thus, the battery cooling section **41** may be considered a part of the tubing arranged to extend along the battery unit **50** in order to enable heat transfer from the battery unit **50,** e.g. the battery cell(s) **51** of the battery unit **50,** to the cooling fluid flowing through the battery cooling section **41.**

The cooling system **2** may further comprise a heat exchanger **6.** The heat exchanger may be arranged in the cooling circuit **4.** The heat exchanger **6** may be arranged downstream from the battery cooling section **41.**

The tubing **42** may be adapted to guide the cooling fluid through the heat exchanger **6** after passing the cooling fluid along the battery unit **50.**

In one example, a portion of the tubing may extend through the heat exchanger **6.**

In one example, the tubing **42** may be fluidly connected to the heat exchanger **6.** Thus, the tubing **42** may be fluidly connected to a heat exchanger inlet of the heat exchanger **6.** Correspondingly, the tubing **42** may be fluidly connected to a heat exchanger outlet of the heat exchanger **6.** The tubing **42** may be attached to the heat exchanger **6** by means of an adhesive such as glue or by means of welding. For example, if the tubing is in a high thermal conductivity material such as graphite and/or graphene, glue may be suitable for attaching the tubing **42** to the heat exchanger **6.** If the tubing is in a metal material such as copper or aluminum, welding may be suitable for attaching the tubing **42** to the heat exchanger **6.**

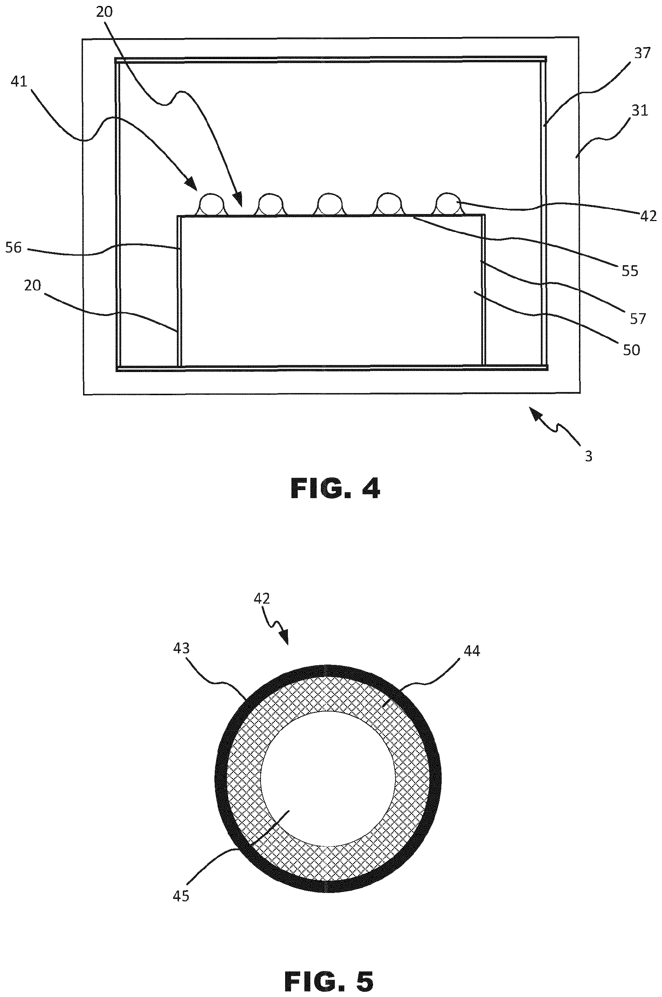

The cooling system **2** may comprise a heat exchanging arrangement for cooling the cooling fluid in the cooling circuit **4.** As will be described with reference to **FIG. 5****,** the heat exchanging arrangement may in addition or alternatively comprise an inner wick structure of the tubing.

In order to enable an even temperature distribution in the battery unit and increase the heat exchange rate between the cooling fluid and the battery unit and battery cells, one or more heat conduction elements **20** may be utilized.

Thus the cooling system **2** may comprise the one or more heat conduction elements 20. The one or more heat conduction elements **20** may be arranged to at least partially wrap around the battery cooling section **41.** The one or more heat conduction elements **20** may be arranged to be in contact with at least a portion of the battery unit **50.**

Advantageously, the one or more heat conduction elements 20 may be arranged to wrap around at least a portion of the battery unit **50.** Accordingly, one or more heat conduction element **20** may be arranged to at least partially wrap around the battery cooling section **41** as well as the battery unit **50.**

The one or more heat conduction element **20** may be adapted to transfer heat from the battery unit **50** to tubing **42,** i.e. to the cooling fluid flowing through the tubing **42.** In other words, the one or more heat conduction element **20** may be adapted to dissipate heat from the battery unit **50** to the tubing **42,** i.e. to the cooling fluid flowing through the tubing **42.**

The one or more heat conduction elements **20** may be in a heat conductive material. As the skilled person is aware, a heat conductive material is material enabling a more rapid rate of heat transfer. Due to their properties, such material allows for more efficient heat dissipation from the battery cells and the battery unit.

The heat conductive material may be graphite, aluminum, copper or graphene. The heat conduction elements **20** may comprise graphite, aluminum, copper and/or graphene. In one example, the heat conduction elements **20** may be in graphite, aluminum, copper and/or graphene.

The heat conduction element(s) may be provided in different forms.

In one example, the one or more heat conduction elements **20** may be provided as a film or a foil. In one example, a plurality of heat conduction elements **20** may be provided as a plurality of film or foils.

In one example, the heat conduction elements **20** may be provided as a rigid casing member.

In one example, the one or more heat conduction elements **20** may be provided as a single member, it may however be envisioned that the heat conduction elements **20** may be provided as elements comprising a plurality of members being arranged in contact with each other.

Advantageously, the one or more heat conduction elements **20** may be formed by a single foil or film. Said single foil or film may be arranged to wrap around at least a portion of the tubing **42** and at least a portion of the battery unit **50.**

In one example, the one or more heat conduction elements may be arranged to coat the exterior surface of at least a portion of the battery cooling section **41.** Thus, a portion of the tubing **42** forming the battery cooling section **41** may be externally coated with the one or more heat conduction elements. Preferably, the battery cooling section **41** may be completely coated with the one or more heat conduction elements such that the entire exterior surface of the battery cooling section **41** is covered in a high thermal conductivity material.

In one example, a pump may be utilized to control the flow of the cooling fluid in the cooling circuit **4.** The battery system 1 may thus comprise a pump 35. The pump **35** may be arranged in the cooling circuit **4.** The pump **35** may be configured to control the flow of the cooling fluid through the cooling circuit **4.**

The pump **35** may be any type of suitable pump for the pumping of a cooling fluid such as a positive displacement pump. In one example, the pump **35** may be configured to be operatively connected to a control unit for controlling of the operation of the pump **35.**

Advantageously, an outlet of the cooing circuit **4** may be fluidly connected to an inlet of the pump **35** and an inlet of the cooling circuit **4** may be fluidly connected to an outlet of the pump **35.** The pump **35** may be adapted to circulate the cooling fluid through the cooling circuit **4.** The pump **35** may be driven by means of any conventional source. For example, the pump **35** may be an electrical pump powered by the battery module **3** or a separate battery electrically connected to the pump **35.** The pump **35** may be a mechanically driven pump, such as a gear driven pump, connected to a rotating shaft, e.g. a rotating shaft of the vehicle.

The pump **35** may be arranged downstream of the battery cooling section **41.** Thus, the outlet of the cooling circuit **4** fluidly connecting to the pump **35** may be arranged downstream of the battery cooling section **41.**

The cooling circuit **4** may be a closed cooling circuit for circulating the cooling fluid. The closed cooling circuit may thus be a closed loop cooling circuit. In one example, the pump **35** may form a part of the closed cooling circuit.

The battery module **3** may comprise a battery housing **31.** The battery housing **31** may be adapted to accommodate the battery unit **50.** The battery housing **31** may accommodate the battery unit **50.** The battery housing **31** may be in metal such as steel or aluminum. In one example, the battery housing **31** may be adapted to encapsulate the battery unit **50.**

In one example, the battery unit **50** may be mounted to the battery housing **31.** Depending on the type of cells implemented in the battery unit **50,** different types of mountings may be utilized. In one example, the battery unit **50** may be fastened to the battery housing **50** by means of an adhesive such as glue or one or more fasteners such as screws. In one example, the adhesive may be in a material with high thermal conductivity.

In one example, the battery unit **50** may be mounted to the battery housing **31** by means of a bus bar. The bus bar may be in a material with high thermal conductivity.

In one example, cooling liquid may be present inside the battery housing **31** in order to further enhance cooling of the battery unit **50.** The battery unit **50** may be at least partially submerged in the cooling liquid inside the battery housing **31.** The cooling liquid may be water such as deionized water or any other conventional type of cooling liquid such as glycol. The battery housing **31** may be adapted to sealingly encapsulate the battery unit **50** and thereby prevent leakage of the cooling liquid inside the battery housing **31** out of the battery housing **31.**

Advantageously, the heat exchanger **6** may be arranged outside the battery housing **31.** To further avoid heat generation inside the battery housing **31,** the pump **35** may be arranged outside the housing **31.** Thus, the heat generated from the pump **35** during operation is not accumulated inside the battery housing **31** negatively impacting the cooling performance.

In one example, the battery cooling section **41** of the tubing **42** may comprise tubing in graphite and/or graphene. Thus, the part of the tubing **42** forming the battery cooling section **41** routed along the battery unit **50** may be in graphite and/or graphene. In one example, the entire tubing **42** or other selected portions of the tubing **42** may be in graphite and/or graphene.

The battery cooling section **41** may be provided in a shape allowing for further heat dissipation from the battery unit **50.**

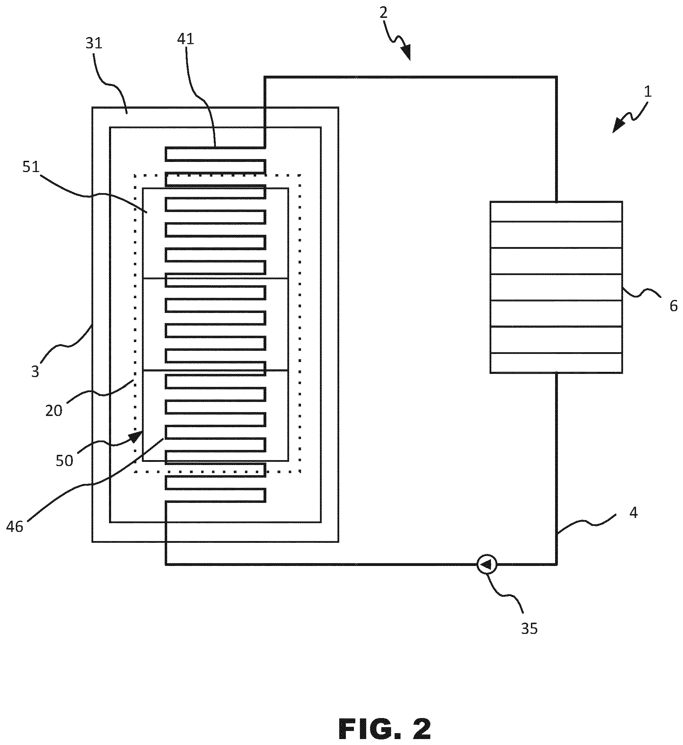

In the example depicted in **FIG. 2****,** the battery cooling section **41** may comprise a meandering tube portion **46.** The meandering tube portion 46 may comprise a plurality of interconnected curved portions providing a meandering flow of the cooling fluid along the battery unit **50.**

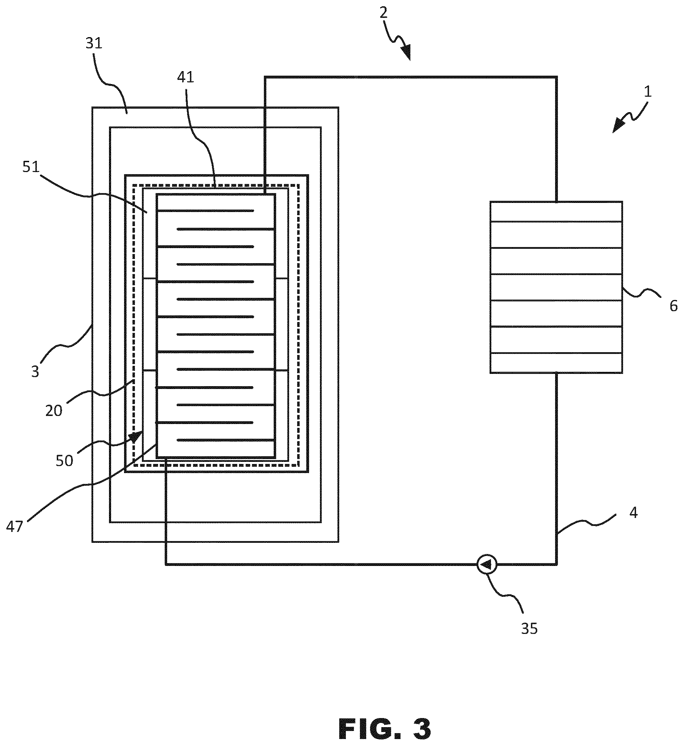

In the example depicted in **FIG. 3****,** the battery cooling section **41** may comprise a labyrinth tube portion **47.** The labyrinth tube portion **47** may be adapted to provide a labyrinthine flow path of the cooling fluid along the battery unit **50.** The labyrinth tube portion 47 may be formed by a plurality of wall sections distributed inside a housing, thereby forming the labyrinthine flow path for the cooling fluid.

A cross-section of an exemplary battery system **1** is depicted in **FIG. 4****.**

Referencing **FIG. 4****,** the one or more heat conduction elements 20 are arranged to extend along a first surface **55** of the battery unit **50.** In the present invention, the one or more heat conduction elements **20** are arranged to extend across the first surface **55.**

The one or more heat conduction element **20** may be arranged to at least partially cover the first surface **55** of the battery unit **50.** The first surface **55** may be arranged proximate and/or adjacent to the battery cooling section **41.** The first battery cooling section **41** may be routed along the first surface **55.**

In one example, the one or more heat conduction elements **20** may be arranged adjacent to the first surface **55** of the battery unit **50.** The one or more heat conduction elements **20** may be arranged to be in contact with a surface of the battery cooling section **41.** Said surface of battery cooling section may face away from the first surface **55** of the battery unit **50** such that the tubing **42** is arranged between the battery unit **50** and the one or more heat conduction elements **20.**

The battery unit **50** has a second surface **56** and a third surface **57.** The second surface **56** and the third surface **57** are arranged opposite to each other. The second surface **56** and the third surface **57** are arranged to extend in a direction orthogonal to the first surface **55.** The one or more heat conduction elements **20** are arranged to extend along and in contact with the second surface **56** or alternatively or additionally along and in contact with the third surface **57.**

The second surface **56** and the third surface **57** may as depicted in **FIG. 4** be arranged orthogonally to the first surface **55.** It may however be envisioned that the second surface **56** and/or third surface **57** only partially extends orthogonally to the first surface **55,** i.e. extends in a direction with a component orthogonal to the first surface **55.**

Further referencing **FIG. 4****,** the one or more heat conduction elements 20 may be arranged to be in contact with the battery housing **31** for dissipating heat from the battery unit **50** the battery housing **31.**

Advantageously, a portion of the one or more heat conduction elements **20** may extend along and be in contact with the surface of the battery housing **31.** This allows for a relatively large contact area between the heat conduction element(s) and the battery housing, increasing the heat dissipation from the battery unit.

Further referencing **FIG. 4****,** the interior walls of the battery housing **31** may be clad with a layer of heat conductive material **37** such as graphite, aluminum, copper and/or graphene.

Advantageously, the layer of heat conductive material **37** may encapsulate the battery unit **50** from the battery housing **31.**

As aforementioned, in one example, the cooling system **2** may comprise a single heat conduction element 20. Said single heat conduction element **20** may wrap around at least a portion of the battery cooling section **41** and preferably at least a portion of the battery unit **50.** As aforementioned said single heat conduction element **20** may be formed as a single member or a plurality of members arranged in contact with each other.

In one example, the cooling system **2** may comprise a plurality of heat conduction elements **20.** The heat conduction elements **20** may be arranged to wrap around at least a portion of the battery cooling section **41** and preferably at least a portion of the battery unit **50.** The heat conduction elements **20** may be arranged parallel to each other.

In one example, the cooling system **2** may form a heat pipe cooling system. As the skilled person is aware, a heat pipe cooling system is a cooling system implementing a heat pipe. A heat pipe is a heat-transfer device that employs phase transition and capillary forces to transfer heat. A heat pipe thus utilizes a phase change from liquid to vapor in order to cool a component. At a later stage in the cooling system, the evaporated fluid is condensed back into liquid releasing the latent heat from the cooling fluid. The cooling fluid may hence be chosen to be a cooling fluid suitable for a heat pipe. The cooling fluid may for example be any one of water, ethanol, methanol, ethane, propylene and pentane, although other conventional cooling fluids also may be suitable.

The heat pipe cooling system may further comprise a condensing arrangement adapted to condense the cooling fluid downstream of the battery cooling section **41.** The condensing arrangement may comprise condensing unit such as a heat sink and/or a cooling fan. The heat exchanging arrangement may hence comprise the inner wick structure and the condensing arrangement. In one example, a cooling fan may be utilized to cool the cooling fluid, thereby causing condensation of the cooling fluid. This may be achieved for example by means of directing a cooling air flow onto the tubing **42.** In one example, a heat sink is arranged in the cooling circuit **4** to cool the cooling fluid, thereby causing condensation of the cooling fluid. In one example, a heat sink and cooling fan may be utilized in combination to cause condensation the cooling fluid.

**FIG. 5** depicts a cross-section of the tubing **42** of a cooling system **2** forming a heat pipe cooling system according to one example.

The tubing **42** may have an inner wick structure **44** for causing flow of the cooling fluid by means of capillary force. In one example, the entirety or majority of the tubing **42** may form a heat pipe. In one example, only the battery cooling section **41** may form a heat pipe.

The inner wick structure **44** may be adapted to generate a flow of the cooling fluid by exerting the fluid to movement by means of capillary forces. The inner wick structure 44 may be a porous structure. In one example, the inner wick structure **44** may be in the form of a sintered structure with a surface formed by a sintered powder forming a plurality of pores providing the capillary force. In one example, the inner wick structure **44** may be in the form of machined grooves extending along the tubing in order to provide the capillary force.

The inner wick structure **44** may form an inner wall surrounding the flow passage **45** inside the tubing **42.** The inner wick structure **44** is thus adapted to be in contact with the cooling fluid flowing inside the flow passage **45** in order to generate the capillary force controlling the flow of the cooling fluid.

Notably, the above-described heat pipe cooling system may optionally include a pump configured to control the flow of cooling fluid through the cooling circuit. The capillary forces generated by the inner wick structure may be utilized instead of a pump. However, in order to increase the efficiency, a pump as described with reference to **FIG. 1-3** may be utilized in conjunction with the inner wick structure in order to achieve the flow of cooling fluid through the cooling circuit.

A battery system and vehicle may be provided in accordance with any of the following examples.

Example 1: Battery system **1** for a vehicle, the battery system **1** comprising a battery module **3** and a cooling system **2,** wherein the battery module **3** comprises a battery unit **50** with one or more battery cell **51,** and
wherein the cooling system **2** comprises:
- a cooling circuit **4** comprising tubing **42** for distribution of a cooling fluid and cooling of the one or more battery cell **51,** the tubing **42** comprising a battery cooling section **41** routed along the battery unit **50,** and
- one or more heat conduction elements **20** arranged to at least partially wrap around the battery cooling section **41** and be in contact with at least a portion of the battery unit **50.**

Example 2: Battery system **1** of example 1, wherein the cooling system **2** comprises a heat exchanger **6** arranged in the cooling circuit **4** downstream from the battery cooling section **41.**

Example 3: Battery system **1** of example 1 or 2, wherein the one or more heat conduction elements **20** are arranged to wrap around at least a portion of the battery unit **50.**

Example 4: Battery system **1** of any of the examples 1-3, wherein the one or more heat conduction elements **20** are arranged to extend along a first surface **55** of the battery unit **50.**

Example 5: Battery system **1** of example 4, wherein the one or more heat conduction elements **20** are arranged adjacent to the first surface **55** of the battery unit **50** and the one or more heat conduction elements **20** are arranged to be in contact with a surface of the battery cooling section **41** facing away from the first surface **55** of the battery unit **50** such that the tubing **42** is arranged between the battery unit **50** and the one or more heat conduction elements **20.**

Example 6: Battery system **1** of example 4 or 5, wherein the battery unit **50** has a second and third surface **56, 57** arranged opposite to each other and extending in a direction substantially orthogonal to the first surface **55,** whereby the one or more heat conduction elements **20** are arranged to extend along and be in contact with the second and/or third surface **56, 57.**

Example 7: Battery system **1** of any of the examples 1-6, wherein the battery module **3** comprises a battery housing **31** adapted to accommodate the battery unit **50.**

Example 8: Battery system **1** of example 7, wherein the heat exchanger **6** is arranged outside of the battery housing **31.**

Example 9: Battery system **1** of example 7 or 8, wherein the one or more heat conduction elements **20** are arranged to be in contact with the battery housing **31** for dissipating heat from the battery unit **50** to said battery housing **31.**

Example 10: Battery system **1** of any of the examples 1-9, wherein the one or more heat conduction elements **20** are provided as a film or a foil.

Example 11: Battery system **1** of any of the examples 1-10, wherein the interior walls of the battery housing **31** are clad with a layer of a heat conductive material **37** such as graphite, aluminum, copper and/or graphene.

Example 12: Battery system **1** of example 11, wherein the layer of heat conductive material **37** encapsulates the battery unit **50** from the battery housing **31.**

Example 13: Battery system **1** of any of the examples 1-12, wherein the one or more heat conduction elements **20** comprises graphite, aluminum, copper and/or graphene.

Example 14: Battery system **1** of any of the examples 1-13, wherein the battery cooling section **41** of the tubing **42** comprises tubing in graphite and/or graphene.

Example 15: Battery system **1** of any of the examples 1-14, wherein the battery cooling section **41** comprises a meandering tube portion **46** or labyrinth tube portion **47** routed along the battery unit **50.**

Example 16: Battery system **1** of any of the examples 7-15, wherein the battery unit **50** is at least partially submerged in a cooling liquid inside the battery housing **31.**

Example 17: Battery system **1** of any of the examples 1-16, wherein the cooling circuit **4** is a closed cooling circuit for circulating the cooling fluid.

Example 18: Battery system **1** of any of the examples 1-17, wherein the cooling system **2** forms a heat pipe cooling system, wherein the tubing **42** has an inner wick structure **44** for causing flow of the cooling fluid by means of capillary force.

Example 19: Battery system **1** of any of the examples 1-18, further comprising a pump **35** arranged in the cooling circuit **4,** the pump **35** being configured to control the flow of the cooling fluid through the cooling circuit **4.**

Example 20: Battery system **1** of any of the examples 1-19, wherein the one or more heat conduction elements **20** are arranged to coat the outer exterior surface of at least a portion of the battery cooling section **41.**

Example 21: Vehicle comprising a battery system **1** according to any of the examples 1-20.

Example 22: Vehicle of example 21, wherein the battery system 1 is configured to power a propulsion source of the vehicle.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

## Claims

1. Battery system (1) for a vehicle, the battery system (1) comprising a battery module (3) and a cooling system (2), wherein the battery module (3) comprises a battery unit (50) with one or more battery cell (51), and
wherein the cooling system (2) comprises:
- a cooling circuit (4) comprising tubing (42) for distribution of a cooling fluid and cooling of the one or more battery cell (51), the tubing (42) comprising a battery cooling section (41) routed along the battery unit (50), and
- one or more heat conduction elements (20) arranged to at least partially wrap around the battery cooling section (41) and be in contact with at least a portion of the battery unit (50), wherein the one or more heat conduction elements (20) are arranged to extend along a first surface (55) of the battery unit (50), and
wherein the battery unit (50) has a second and third surface (56, 57) arranged opposite to each other and extending in a direction substantially orthogonal to the first surface (55), whereby the one or more heat conduction elements (20) are arranged to extend along and be in contact with the second and/or third surface (56, 57).

2. Battery system (1) of claim 1, wherein the cooling system (2) comprises a heat exchanger (6) arranged in the cooling circuit (4) downstream from the battery cooling section (41).

3. Battery system (1) of claim 1 or 2, wherein the one or more heat conduction elements (20) are arranged to wrap around at least a portion of the battery unit (50).

4. Battery system (1) of any one of the claims 1-3, wherein the one or more heat conduction elements (20) are arranged adjacent to the first surface (55) of the battery unit (50) and the one or more heat conduction elements (20) are arranged to be in contact with a surface of the battery cooling section (41) facing away from the first surface (55) of the battery unit (50) such that the tubing (42) is arranged between the battery unit (50) and the one or more heat conduction elements (20).

5. Battery system (1) of any of the claims 1-4, wherein the battery module (3) comprises a battery housing (31) adapted to accommodate the battery unit (50).

6. Battery system (1) of claim 5, wherein the one or more heat conduction elements (20) are arranged to be in contact with the battery housing (31) for dissipating heat from the battery unit (50) to said battery housing (31).

7. Battery system (1) of any of the claims 1-6, wherein the one or more heat conduction elements (20) are provided as a film or a foil.

8. Battery system (1) of any of the claims 1-7, wherein the one or more heat conduction elements (20) comprises graphite, aluminum, copper and/or graphene.

9. Battery system (1) of any of the claims 1-8, wherein the battery cooling section (41) comprises a meandering tube portion (46) or labyrinth tube portion (47) routed along the battery unit (50).

10. Battery system (1) of any of the claims 5-9, wherein the battery unit (50) is at least partially submerged in a cooling liquid inside the battery housing (31).

11. Battery system (1) of any of the claims 1-10, wherein the cooling system (2) forms a heat pipe cooling system, wherein the tubing (42) has an inner wick structure (44) for causing flow of the cooling fluid by means of capillary force.

12. Battery system (1) of any of the claims 1-11, further comprising a pump (35) arranged in the cooling circuit (4), the pump (35) being configured to control the flow of the cooling fluid through the cooling circuit (4).

13. Vehicle comprising a battery system (1) according to any of the claims 1-12.

## Patentansprüche

1. Batteriesystem (1) für ein Fahrzeug, wobei das Batteriesystem (1) ein Batteriemodul (3) und ein Kühlsystem (2) umfasst, wobei das Batteriemodul (3) eine Batterieeinheit (50) mit einer oder mehreren Batteriezellen (51) umfasst, und
wobei das Kühlsystem (2) Folgendes umfasst:
- einen Kühlkreislauf (4) mit Schläuchen (42) zur Verteilung einer Kühlflüssigkeit und zur Kühlung der einen oder mehreren Batteriezellen (51), wobei die Schläuche (42) einen Batteriekühlabschnitt (41) umfassen, der entlang der Batterieeinheit (50) verläuft, und
- ein oder mehrere Wärmeleitelemente (20), die so angeordnet sind, dass sie den Batteriekühlabschnitt (41) zumindest teilweise umhüllen und mit zumindest einem Teil der Batterieeinheit (50) in Kontakt stehen, wobei das eine oder die mehreren Wärmeleitelemente (20) so angeordnet sind, dass sie sich entlang einer ersten Oberfläche (55) der Batterieeinheit (50) erstrecken, und
wobei die Batterieeinheit (50) eine zweite und eine dritte Oberfläche (56, 57) aufweist, die einander gegenüberliegend angeordnet sind und sich in einer Richtung im Wesentlichen orthogonal zu der ersten Oberfläche (55) erstrecken, wobei das eine oder die mehreren Wärmeleitelemente (20) so angeordnet sind, dass sie sich entlang der zweiten und/oder dritten Oberfläche (56, 57) erstrecken und mit diesen in Kontakt stehen.

2. Batteriesystem (1) nach Anspruch 1, wobei das Kühlsystem (2) einen Wärmetauscher (6) umfasst, der in dem Kühlkreislauf (4) stromabwärts von dem Batteriekühlabschnitt (41) angeordnet ist.

3. Batteriesystem (1) nach Anspruch 1 oder 2, wobei das eine oder die mehreren Wärmeleitelemente (20) so angeordnet sind, dass sie zumindest einen Teil der Batterieeinheit (50) umhüllen.

4. Batteriesystem (1) nach einem der Ansprüche 1 bis 3, wobei das eine oder die mehreren Wärmeleitelemente (20) neben der ersten Oberfläche (55) der Batterieeinheit (50) angeordnet sind und das eine oder die mehreren Wärmeleitelemente (20) so angeordnet sind, dass sie in Kontakt mit einer Oberfläche des Batteriekühlabschnitts (41) stehen, die von der ersten Oberfläche (55) der Batterieeinheit (50) abgewandt ist, sodass die Schläuche (42) zwischen der Batterieeinheit (50) und dem einen oder den mehreren Wärmeleitelementen (20) angeordnet ist.

5. Batteriesystem (1) nach einem der Ansprüche 1 bis 4, wobei das Batteriemodul (3) ein Batteriegehäuse (31) umfasst, das zur Aufnahme der Batterieeinheit (50) geeignet ist.

6. Batteriesystem (1) nach Anspruch 5, wobei das eine oder die mehreren Wärmeleitelemente (20) so angeordnet sind, dass sie in Kontakt mit dem Batteriegehäuse (31) stehen, um Wärme von der Batterieeinheit (50) zu dem Batteriegehäuse (31) abzuleiten.

7. Batteriesystem (1) nach einem der Ansprüche 1 bis 6, wobei das eine oder die mehreren Wärmeleitelemente (20) als Film oder Folie ausgebildet sind.

8. Batteriesystem (1) nach einem der Ansprüche 1 bis 7, wobei das eine oder mehrere Wärmeleitelemente (20) Graphit, Aluminium, Kupfer und/oder Graphen umfasst.

9. Batteriesystem (1) nach einem der Ansprüche 1 bis 8, wobei der Batteriekühlabschnitt (41) einen mäanderförmigen Rohrabschnitt (46) oder einen labyrinthförmigen Rohrabschnitt (47) umfasst, der entlang der Batterieeinheit (50) verläuft.

10. Batteriesystem (1) nach einem der Ansprüche 5 bis 9, wobei die Batterieeinheit (50) zumindest teilweise in eine Kühlflüssigkeit innerhalb des Batteriegehäuses (31) eingetaucht ist.

11. Batteriesystem (1) nach einem der Ansprüche 1 bis 10, wobei das Kühlsystem (2) ein Wärmerohr-Kühlsystem bildet, wobei die Schläuche (42) eine innere Dochtstruktur (44) aufweist, um mittels Kapillarkraft einen Fluss der Kühlflüssigkeit zu bewirken.

12. Batteriesystem (1) nach einem der Ansprüche 1 bis 11, das ferner eine im Kühlkreislauf (4) angeordnete Pumpe (35) umfasst, wobei die Pumpe (35) so konfiguriert ist, dass sie den Durchfluss der Kühlflüssigkeit durch den Kühlkreislauf (4) steuert.

13. Fahrzeug, umfassend ein Batteriesystem (1) nach einem der Ansprüche 1 bis 12.

## Revendications

1. Système de batterie (1) pour un véhicule, le système de batterie (1) comprenant un module de batterie (3) et un système de refroidissement (2), dans lequel le module de batterie (3) comprend une unité de batterie (50) avec un ou plusieurs éléments de batterie (51), et dans lequel le système de refroidissement (2) comprend :
- un circuit de refroidissement (4) comprenant une conduite (42) pour la distribution d'un fluide de refroidissement et le refroidissement d'un ou plusieurs éléments de batterie (51), la conduite (42) comprenant une section de refroidissement de la batterie (41) acheminée le long de l'unité de batterie (50), et
- un ou plusieurs éléments de conduction thermique (20) conçus pour envelopper au moins partiellement la section de refroidissement de la batterie (41) et être en contact avec au moins une partie de l'unité de batterie (50), dans lequel le ou les éléments de conduction thermique (20) sont conçus pour s'étendre le long d'une première surface (55) de l'unité de batterie (50), et
l'unité de batterie (50) présente une deuxième et une troisième surface (56, 57) opposées l'une à l'autre et s'étendant dans une direction sensiblement orthogonale à la première surface (55), un ou plusieurs éléments de conduction thermique (20) étant disposés de manière à s'étendre le long de la deuxième et/ou de la troisième surface (56, 57) et à être en contact avec elles.

2. Système de batterie (1) selon la revendication 1, dans lequel le système de refroidissement (2) comprend un échangeur de chaleur (6) disposé dans le circuit de refroidissement (4) en aval de la section de refroidissement de la batterie (41).

3. Système de batterie (1) selon la revendication 1 ou 2, dans lequel un ou plusieurs éléments de conduction thermique (20) sont disposés de manière à entourer au moins une partie de l'unité de batterie (50).

4. Système de batterie (1) selon l'une quelconque des revendications 1 à 3, dans lequel un ou plusieurs éléments de conduction thermique (20) sont disposés à côté de la première surface (55) de l'unité de batterie (50) et un ou plusieurs éléments de conduction thermique (20) sont disposés de façon à être en contact avec une surface de la section de refroidissement de la batterie (41) orientée à l'opposé de la première surface (55) de l'unité de batterie (50) de sorte que la conduite (42) est disposé entre l'unité de batterie (50) et un ou plusieurs éléments de conduction thermique (20).

5. Système de batterie (1) selon l'une quelconque des revendications 1 à 4, dans lequel le module de batterie (3) comprend un boîtier de batterie (31) adapté pour accueillir l'unité de batterie (50).

6. Système de batterie (1) selon la revendication 5, dans lequel un ou plusieurs éléments de conduction thermique (20) sont disposés de manière à être en contact avec le boîtier de la batterie (31) pour dissiper la chaleur de l'unité de batterie (50) vers ledit boîtier de la batterie (31).

7. Système de batterie (1) selon l'une des revendications 1 à 6, dans lequel le ou les éléments de conduction thermique (20) se présentent sous la forme d'un film ou d'une feuille.

8. Système de batterie (1) selon l'une des revendications 1 à 7, dans lequel un ou plusieurs éléments de conduction thermique (20) comprennent du graphite, de l'aluminium, du cuivre et/ou du graphène.

9. Système de batterie (1) selon l'une des revendications 1 à 8, dans lequel la section de refroidissement de la batterie (41) comprend une partie de tube sinueuse (46) ou une partie de tube en labyrinthe (47) acheminée le long de l'unité de batterie (50).

10. Système de batterie (1) selon l'une des revendications 5 à 9, dans lequel l'unité de batterie (50) est au moins partiellement immergée dans un liquide de refroidissement à l'intérieur du boîtier de batterie (31).

11. Système de batterie (1) selon l'une des revendications 1 à 10, dans lequel le système de refroidissement (2) forme un système de refroidissement par caloduc, dans lequel la conduite (42) possède une structure de mèche intérieure (44) pour provoquer l'écoulement du fluide de refroidissement au moyen de la force capillaire.

12. Système de batterie (1) selon l'une des revendications 1 à 11, comprenant en outre une pompe (35) disposée dans le circuit de refroidissement (4), la pompe (35) étant configurée pour contrôler le flux du fluide de refroidissement à travers le circuit de refroidissement (4).

13. Véhicule comprenant un système de batterie (1) selon l'une des revendications 1 à 12.
